# FASCICULE DE BREVET EUROPEEN

(11) **EP 0 662 415 B1**
(45) Date de publication et mention de la délivrance du brevet: **17.03.1999**
(21) Numéro de dépôt: 95400010.5
(22) Date de dépôt: 03.01.1995
(51) Int. Cl.: B62D 1/19

(54) **Dispositif d'absorption d'énergie à tenue axiale pour colonne de direction de véhicule automobile**
Energie-absorbierende Einrichtung mit axialer Führung für eine Kraftfahrzeuglenksäule
Energy absorbing device with axial guide for the steering column of a motor vehicle

(30) Priorité: 06.01.1994 FR 9400084
(43) Date de publication de la demande: 12.07.1995
(73) Titulaire: LEMFÖRDER NACAM SA, 41100 Vendôme (FR)
(72) Inventeur: Fouquet, Jean-Michel, F-41100 Vendome (FR); Duval, Benoît, F-41100 Vendome (FR); Millet, Pascal, F-41100 Meslay (FR)
(74) Mandataire: Phélip, Bruno

(56) Documents cités:
- EP-A- 0 179 690
- EP-A- 0 252 031
- EP-A- 0 557 767
- DE-C- 3 619 125
- GB-A- 1 120 799
- GB-A- 2 116 496
- GB-A- 2 268 125
- US-A- 4 901 592
- MACHINE DESIGN, vol. 37, no.30, 23 Décembre 1965 CLEVELAND US, page 111 'Deforming Wire Absorbs Shock'

## Description

La présente invention se rapporte à un dispositif d'absorption d'énergie pour colonne de direction de véhicule automobile réglable en profondeur et/ou en inclinaison, dont l'arbre de direction est monté dans un tube-corps, qui est supporté et bloqué sur la carrosserie à la position voulue.

On connaît de nombreux dispositifs d'absorption d'énergie, qui s'adaptent sur des directions de véhicule automobile non réglables en profondeur ou en inclinaison. Le problème est plus délicat avec des directions réglables soit en profondeur, soit en inclinaison. Un tel dispositif adaptable sur une colonne de direction réglable en inclinaison est décrit dans le document US-4.901.592. Il comprend une plaque en forme de U dont l'extrémité d'une branche est reliée à la colonne de direction et l'autre à un support fixé à la carrosserie. L'absorption d'énergie est réalisée par le déplacement et la déformation de la partie courbe de la plaque en forme de U.

Dans le cas de colonnes de direction réglables à la fois en profondeur et en inclinaison, le problème est encore plus délicat. On connaît des supports permettant ce double réglage. Pour illustrer de tels dispositifs de l'art antérieur, on peut citer notamment ceux décrits dans les documents DE-36 19 125 et GB-2.116.496. Mais dans ces deux documents, les supports décrits ne comprennent pas de système d'absorption d'énergie. Le document GB-2.268.125 décrit un dispositif d'absorption d'énergie comportant les caractéristiques du préambule de la revendication 1, c'est-à-dire pouvant être adapté à une colonne de direction réglable à la fois en profondeur et en inclinaison. Dans ce dispositif, un support rigide comprenant deux fentes longitudinales, parallèles à l'axe de la colonne, est accouplé au tube de colonne. Un boulon relie ce support à une console permettant le réglage de la colonne de direction. Ce boulon est associé à une bande déformable, soudée au support. Ce dispositif absorbe l'énergie en cas de choc par déplacement du boulon, vers l'extérieur des fentes longitudinales, entraînant un déplacement de la partie courbe de la bande déformable. Le système d'absorption n'intervient pas lors du réglage de la colonne, ni lors de la première phase de l'impact..

Les dispositifs connus ne permettent pas d'absorber un effort prédéterminé de valeur constante, quelle que soit la position de réglage. De plus, lors d'un choc, ces dispositifs ne maintiennent pas la colonne de direction dans le réglage angulaire qu'elle avait avant le choc.

Le but de la présente invention est de proposer un système d'absorption d'énergie de colonne de direction de véhicule, réglable en profondeur et/ou en inclinaison, qui permette d'absorber un effort prédéterminé appliqué au point volant du conducteur, et cela quelle que soit la position de réglage, tout en maintenant la colonne de direction dans le réglage angulaire qu'elle avait avant le choc.

L'invention concerne un dispositif d'absorption d'énergie de colonne de direction conforme à la revendication 1.

Avantageusement, le système de blocage du tube-corps dans le support, comportant deux montants, est constitué par:
- une tige de serrage traversant deux pattes de serrage aménagées sur chacun des montants du support,
- un système de transformation de mouvement monté à l'extérieur de l'un des montants, à l'extrémité de la tige de serrage,
- un moyen de tenue axiale monté à l'extérieur de l'autre montant sur l'autre extrémité de la tige de serrage,
- l'organe de manoeuvre, monté sur le système de transformation de mouvement, de manière qu'en tournant l'organe de manoeuvre dans le sens voulu, autour de l'axe de blocage, on assure par le système de transformation de mouvement le blocage désiré.

Afin de tirer le meilleur parti de cette architecture, le système de réglage en profondeur est constitué par une lumière aménagée dans chacun des montants, chaque lumière étant sensiblement parallèle à l'axe de la colonne de direction et d'une largeur légèrement plus grande que le diamètre de la tige de serrage, de manière qu'elle puisse traverser et coulisser facilement dans chacune de ces lumières.

Préférentiellement, le système de réglage en inclinaison est constitué par une lumière aménagée dans chacune des pattes du support, dans une direction telle que le réglage angulaire de la colonne soit possible, et d'une largeur légèrement plus grande que le diamètre de la tige de serrage, de manière que la tige de serrage puisse coulisser dans chacune de ces lumières, tout en assurant le blocage.

Selon un mode de réalisation de l'invention, le système d'accrochage comporte:
- une pièce dentée solidaire de la tige de serrage,
- une pièce dentée solidaire du système d'absorption d'énergie, munie d'un trou oblong de passage de la tige de serrage permettant la course de réglage en profondeur,
- le déplacement minimal pour désolidariser les pièces dentées, c'est-à-dire déplacer l'une des pièces dentées par rapport à l'autre pièce, étant inférieur à la course de serrage de la tige de serrage donnée par le système de transformation de mouvement.

Dans un autre mode de réalisation, le système d'accrochage comporte:
- une pièce dentée liée au support,
- une pièce dentée solidaire du système d'absorption d'énergie munie d'un trou oblong de passage de la tige permettant la course de réglage en profondeur,
- un système d'accouplement des deux pièces lié à la commande du système de blocage, la course de désaccouplement étant inférieure à la course de desserrage.

Il est prévu différentes possibilités de réalisation des pièces dentées: les pièces dentées peuvent comporter des dents à section triangulaire, rectangulaire ou carrée. L'une des pièces dentées peut présenter une seule dent, notamment triangulaire, tandis que l'autre est munie de dents à section correspondante, notamment triangulaire. L'une des pièces peut posséder des dents carrées et l'autre une protubérance circulaire. L'une des pièces peut avoir des dents rectangulaires et l'autre une protubérance rectangulaire avec un chanfrein d'entrée. Dans une variante, l'une des pièces a des dents arrondies et l'autre pièce une protubérance circulaire.

Selon un mode de réalisation de l'invention, le système d'absorption d'énergie est un tirant ayant la forme d'un élément plan enroulé autour d'un support transversal monté sur le tube-corps, de manière à avoir une première partie dont l'extrémité est reliée à la pièce dentée, et qui est dans le prolongement de ces deux pièces dentées; et une deuxième partie après le support transversal en forme de retour, afin que lors d'un choc le retour se déroule sous un effort déterminé pour absorber l'énergie voulue.

Dans un autre mode de réalisation de l'invention, le système d'absorption d'énergie est constitué d'un organe amortisseur interposé entre deux éléments susceptibles de s'écarter l'un de l'autre sous l'action d'un effort extérieur, ledit organe comprenant essentiellement un fil enroulé autour d'un axe-support, monté à rotation sur le premier élément, l'extrémité de l'enroulement étant fixée sur ledit axe-support, tandis que l'autre extrémité du fil est fixée sur le deuxième élément, la partie de fil s'étendant entre les deux éléments étant orientées sensiblement dans la direction de l'effort, de sorte que la traction exercée sur le fil par l'écartement des deux éléments provoque le déroulement de la partie enroulée du fil autour de l'axe-support et, ainsi, l'absorption de l'effort.

La section du fil peut être constante ou évolutive. De même, le pas d'enroulement du fil sur l'axe-support peut être constant ou évolutif.

La matière constitutive du fil doit être choisie pour pouvoir résister à des efforts de traction importants. Le fil peut être ainsi réalisé en métal par exemple en acier ou en matière plastique.

Selon un mode de réalisation, le premier élément est muni d'une pièce ayant une forme générale de U, une tige s'étend entre les ailes du U en étant fixée sur elles et reçoit un manchon autour duquel est enroulé le fil, le manchon pouvant tourner sur la tige, l'extrémité de l'enroulement étant alors fixée sur le manchon.

En variante, le fil peut être directement enroulé autour de la tige et son extrémité fixée sur ladite tige.

Du côté de l'autre extrémité du fil, celle-ci s'accroche sur le deuxième élément par des moyens quelconques. Par exemple une plaque d'accrochage peut être soudée à l'extrémité du fil, si celui-ci est métallique, ladite plaque comportant un trou de passage pour un moyen de fixation sur le deuxième élément.

On peut utilement se référer, pour un tel mode de réalisation, à la demande de brevet déposée le même jour par la demanderesse et ayant pour titre "Organe d'absorption d'énergie, notamment pour colonne de direction de véhicule automobile".

Tout en restant dans le cadre de l'invention, et afin d'améliorer la structure du dispositif d'absorption d'énergie selon l'invention, le tube-corps peut être muni d'un dispositif de maintien en position comportant deux V de serrage disposés chacun entre l'un des montants et le tube-corps, avec les deux faces de chaque V s'appliquant contre le tube-corps, de manière que lors du réglage en inclinaison, chacun des V de serrage suive le mouvement du tube-corps en glissant le long de la paroi d'appui de la patte de serrage correspondante, et lois du réglage en profondeur, le tube-corps coulisse dans les V de serrage. Ce système de maintien comporte un système de guidage angulaire de chacun des V de serrage dans le montant correspondant, et il consiste en un téton porté par la face externe de chacun des V de serrage, qui pénètre et coulisse dans une fente aménagée dans la patte de serrage correspondante. Chacune des fentes est inclinée par rapport à l'axe de la colonne de direction de manière à être sensiblement perpendiculaire à la trajectoire du conducteur lors d'un choc. De plus, dans ce système de maintien, il est prévu un système anti-rotation du tube-corps autour de son axe, qui consiste en une plaque fixée en dessous du tube-corps, et comportant deux ailes parallèles à chacun des montants, dont la distance entre les faces externes est légèrement plus faible que l'espacement des parois d'appui des pattes de serrage. Dans ce système anti-rotation les ailes de la plaque sont traversées par l'axe du système de blocage. Dans une variante de réalisation, le système anti-rotation consiste en un élément central, qui est fixé en dessous du tube-corps, et qui est traversé par l'axe du système de blocage.

Le dispositif d'absorption d'énergie pour colonne de direction du véhicule automobile réglable en profondeur et/ou en inclinaison selon l'invention présente ainsi l'avantage d'absorber le même effort appliqué au point volant, quelle que soit la position de réglage. D'autre part, ce dispositif conserve le réglage angulaire de la colonne lors d'un choc.

La présente invention va maintenant être illustrée sans être aucunement limitée par des exemples de réalisation, en référence aux dessins annexés, sur lesquels:
La Figure 1 est une vue longitudinale dans le sens axial d'un dispositif d'absorption d'énergie pour colonne de direction suivant l'invention.
La Figure 2 est une coupe suivant II-II de la Figure 1.
Les Figures 3 à 8 représentent en coupe différentes variantes du système d'accrochage suivant l'invention.
La Figure 9 représente en coupe les différentes phases de l'accrochage.
La Figure 10 est une coupe d'un mode de réalisation du système d'absorption d'énergie suivant l'invention.
La Figure 11 est une vue suivant XI-XI de la Figure 10.

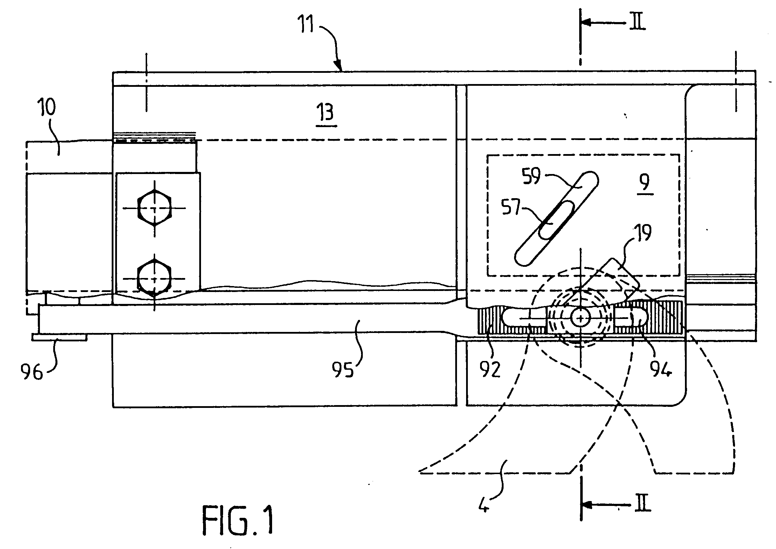

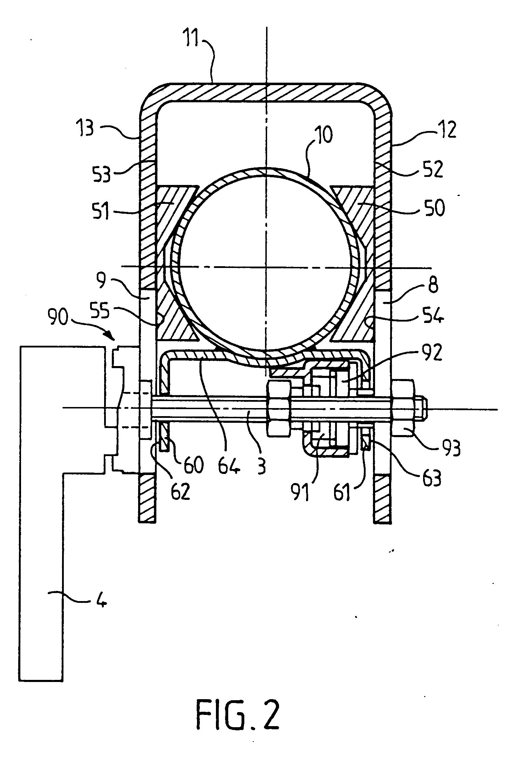

Comme on peut le voir sur les Figures 1 et 2, le dispositif d'absorption d'énergie selon l'invention se monte sur une colonne de direction de véhicule automobile réglable en profondeur et/ou en inclinaison. Cette colonne de direction a l'arbre de direction qui est monté dans un tube-corps 10. Ce tube-corps 10 est lui-même supporté et bloqué sur la carrosserie à la position voulue.

Le dispositif d'absorption d'énergie de l'invention comporte essentiellement:
- un support 11 qui est lié à la carrosserie et qui reçoit le tube-corps 10,
- un système de blocage du tube-corps 10 dans le support 11, l'axe de blocage étant perpendiculaire à l'axe de la colonne de direction, et le système de blocage agissant au moyen d'un organe de manoeuvre 4,
- un système de réglage en profondeur qui coopère avec le système de blocage,
- un système de réglage en inclinaison qui coopère avec le système de blocage,
- un système d'absorption d'énergie entre le tube-corps 10 et l'organe de manoeuvre 4, et agissant dans une direction sensiblement parallèle à l'axe de la colonne de direction,
- le système d'absorption d'énergie étant relié:
   - d'une part du côté de l'extrémité du tube-corps 10 située à l'opposé du volant du conducteur et,
   - d'autre part à un système d'accrochage à un élément fixe, en position de blocage de la colonne.

Le système d'accrochage et le système de blocage sont agencés de manière que lors du desserrage du système de blocage par le levier de manoeuvre 4, ce levier de manoeuvre 4 entraîne un désaccouplement du système d'accrochage.

Comme on peut le voir sur les Figures 1 et 2, le support 11 est constitué de deux montants référencés 12 et 13, qui sont raccordés l'un à l'autre par un élément de raccordement supérieur. De plus, sur chacun de ces montants 12 et 13 sont réalisées deux découpes, de manière à agencer une patte de serrage 8 sur le montant 12 et une patte de serrage 9 sur le montant 13. Enfin, sur chacune des pattes de serrage 8 et 9 sont aménagées des lumières référencées respectivement 19. Ces lumières 19 sont destinées à recevoir le système de blocage et à permettre le réglage en inclinaison.

Le tube-corps 10 comporte un carré-renfort, qui est constitué de deux montants, reliés l'un à l'autre par un élément de raccordement inférieur. Ce carré-renfort est soudé sur le tube-corps 10. De plus, chacun des montants comporte une lumière. Ces lumières sont destinées à recevoir le système de blocage et à permettre le réglage en profondeur de la colonne de direction.

Le système de blocage du tube-corps 10 dans le support 11 est constitué par une tige de serrage 3. Cette tige de serrage 3 traverse les deux pattes de serrage 8 et 9 qui sont aménagées sur chacun des montants 12 et 13 du support 11.

Un système de transformation de mouvement 90 est monté à l'extérieur de l'un des montants 13, c'est-à-dire à l'extrémité de la tige de serrage 3. Un moyen de tenue axiale 93 est monté à l'extérieur de l'autre montant 12 sur l'autre extrémité de la tige de serrage 3. Enfin, l'organe de manoeuvre 4 est monté sur le système de transformation de mouvement 90, de manière qu'en tournant l'organe de manoeuvre 4 dans le sens voulu, autour de l'axe de blocage, on assure par le système de transformation de mouvement 90 le blocage désiré.

Le système de réglage en profondeur est constitué par des lumières qui sont aménagées dans chacun des montants du carré-renfort. Chacune de ces lumières est sensiblement parallèle à l'axe de la colonne de direction, avec une largeur légèrement plus grande que le diamètre de la tige de serrage 3, de manière que cette tige de serrage 3 puisse traverser et coulisser facilement dans chacune de ces lumières.

Le système de réglage en inclinaison est constitué par les lumières 19, qui sont aménagées dans chacune des pattes 8 et 9 du support 11. Chacune de ces lumières 19 a une direction telle que le réglage angulaire de la colonne soit possible. De plus, ces lumières 19 ont une largeur légèrement plus grande que le diamètre de la tige de serrage 3, afin que cette tige de serrage 3 puisse coulisser dans chacune de ces lumières 19, tout en assurant le blocage de la colonne de direction.

Le système d'accrochage qui est représenté sur les Figures 1 et 2 comporte une pièce dentée 91 qui est solidaire de la tige de serrage 3 dans le sens axial de cette tige de serrage 3, et une pièce dentée 92 qui est solidaire du système d'absorption d'énergie. La pièce dentée 92 est munie d'un trou oblong 94 de passage de la tige de serrage 3 afin de permettre la course du réglage en profondeur. Les pièces dentées 91 et 92 sont agencées de manière que le déplacement minimal dans le sens axial de la tige de serrage 3 pour les désolidariser l'une de l'autre, c'est-à-dire le déplacement de la pièce 91 par rapport à la pièce 92 soit inférieur à la course de serrage de la tige de serrage 3, qui est donnée par le système de transformation de mouvement 90.

Un autre système d'accrochage, qui n'est pas représenté sur les Figures, comporte une pièce dentée liée au support 11, et une pièce dentée solidaire du système d'absorption d'énergie. Cette dernière pièce dentée est munie d'un trou oblong de passage de la tige 3 qui permet la course de réglage en profondeur. Le système d'accouplement des deux pièces dentées est lié à la commande du système de blocage, de manière que la course de désaccouplement soit inférieure à la course de desserrage.

Un mode de réalisation du système d'absorption d'énergie est représenté sur la Figure 1, et consiste en un tirant 95 qui a la forme d'un élément plan enroulé entour d'un support transversal 96. Ce support transversal 96 est monté sur le tube-corps 10. Ainsi, le tirant 95 a une première partie dont l'extrémité est reliée à la pièce dentée 92, et qui est dans le prolongement de cette pièce dentée 92. Le tirant 95 a une deuxième partie après le support transversal 96 qui est en forme de retour, afin que lors d'un choc le tirant 95 se déroule sous un effort déterminé pour absorber l'énergie voulue.

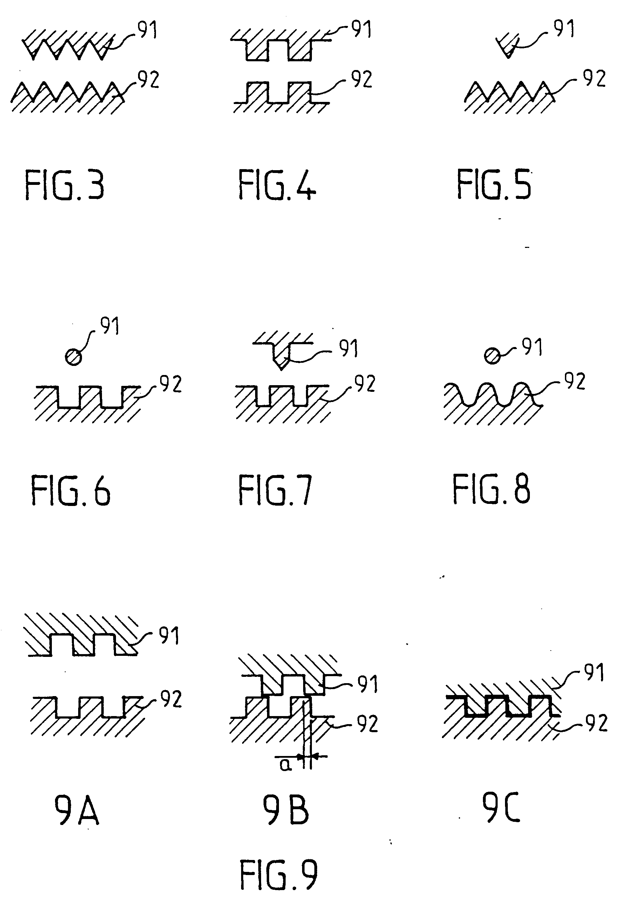

Les Figures 3 à 8 représentent différents modes de réalisation des pièces dentées 91 et 92. Sur la Figure 3, les pièces dentées 91 et 92 ont des dents à section triangulaire. Dans le cas de la Figure 4, les pièces dentées 91 et 92 ont des dents à section carrée. Sur la Figure 5, la pièce dentée 91 a une seule dent triangulaire, tandis que la pièce dentée 92 est munie de dents à section triangulaire. La Figure 6 représente une pièce dentée 92 avec des dents carrées, et une pièce 91 avec une seule protubérance circulaire. Sur la Figure 7, la pièce 91 a une protubérance rectangulaire avec un chanfrein d'entrée, tandis que la pièce 92 est munie de dents rectangulaires. Enfin, dans le cas de la Figure 8, la pièce 91 a une protubérance circulaire, et la pièce 92 est munie de dents arrondies.

Le système d'absorption d'énergie est conçu de telle façon que soumis à un effort de traction, il absorbe un effort constant en se déformant. Les pièces dentées 91 et 92 sont faites de telle manière qu'elles engrènent l'une dans l'autre à l'image de deux crémaillères engrénant l'une dans l'autre. Dans la pièce dentée 92 est aménagé le trou oblong 94 d'un diamètre un peu supérieur à la tige de serrage 3. Ce trou oblong 94 a une longueur telle qu'il permet à la tige de serrage 3 de se déplacer d'une course égale à la course de réglage en profondeur de la colonne de direction. Le déplacement minimal dans le sens perpendiculaire pour désolidariser les pièces dentées 91 et 92, et déplacer la pièce dentée 91 par rapport à la pièce dentée 92 est noté c. Le système de transformation de mouvement 90 est utilisé en phase de réglage de la colonne, et sert à transformer le mouvement de l'organe de manoeuvre 4 actionné par l'utilisateur, en un déplacement d de la tige de serrage 3 suivant son axe. Ce déplacement d est utilisé pour maintenir la colonne de direction en position une fois la phase de réglage de la colonne effectuée, en rapprochant les pattes de serrage 8 et 9, qui enserrent le tube-corps 10. Le système de serrage de la colonne de direction est indépendant du système décrit, du moment que le déplacement d de la tige de serrage soit seulement suivant son axe, supérieur au déplacement c nécessaire pour désolidariser les pièces dentées 91 et 92. De même, le système d'absorption d'énergie est indépendant du système décrit. Seule est prise en compte la pièce d'entrée 92 fixée sur le système d'absorption d'énergie constitué par exemple par le tirant 95.

Le dispositif d'absorption d'énergie, matérialisé par le tirant 95, est fixé au tube-corps 10 d'une manière permanente au moyen du support transversal 96. La pièce dentée 91 est fixée d'une manière rigide à la tige de serrage 3. En phase de repos, c'est-à-dire la colonne de direction réglée et maintenue en position angulaire et/ou en profondeur par le système de serrage, les pièces dentées 91 et 92 sont plaquées l'une sur l'autre. En phase de réglage de la colonne, lors du desserrage de l'organe de manoeuvre 4, la tige de serrage 3 se déplace d'une valeur d entraînant intégralement la pièce dentée 91. La pièce dentée 91 se désolidarise de la pièce dentée 92. Les deux pièces dentées 91 et 92 étant libres l'une par rapport à l'autre, on peut ajuster la colonne de direction en profondeur et en inclinaison. L'effort nécessaire au réglage est alors dû uniquement à l'effort de déplacement des pièces les unes par rapport aux autres. Lors du serrage de l'organe de manoeuvre 4, la tige de serrage 3 entraîne la pièce 91 dans un mouvement inverse à celui précédemment décrit, et les deux pièces dentées 91 et 92 redeviennent solidaires.

Tout effort appliqué suivant l'axe de la colonne de direction est d'abord repris par le système de blocage. Si l'effort appliqué est supérieur aux capacités du système de blocage, le tube-corps 10 aura tendance à glisser, en entraînant dans son mouvement une extrémité du dispositif d'absorption d'énergie représentée par exemple par le tirant 95. L'autre extrémité du tirant 95 est fixée à la pièce dentée 92, qui est alors solidaire de la pièce dentée 91, elle-même fixée sur la tige de serrage 3 immobile en translation. Ainsi, le dispositif d'absorption d'énergie représenté par le tirant 95 est d'une part accroché au tube-corps, mobile en translation, et d'autre part à une partie fixe en translation de la colonne de direction. Le tirant 95 du dispositif d'absorption d'énergie va donc être activé, et il absorbera de l'énergie tant que l'effort appliqué existera. A noter que l'absorption d'énergie se fait quasiment instantanément quelle que soit la position de la colonne en inclinaison ou en profondeur.

Les différentes phases de l'accrochage des pièces dentées 91 et 92 sont représentées sur la Figure 9. Sur la Figure 9A, le système se trouve en phase de réglage, tandis que pour la Figure 9B, les dents des pièces 91 et 92 se touchent l'une l'autre, lors du début du serrage de l'organe de manoeuvre 4. Après une faible course a, comme on peut le voir la Figure 9B, l'accrochage physique représenté sur la Figure 9C est réalisé.

Le dispositif d'absorption d'énergie selon l'invention présente ainsi l'avantage de s'adapter sur une colonne de direction réglable en profondeur et/ou en inclinaison, et d'autre part, il présente la caractéristique que lors d'un choc, il absorbe au niveau du volant un effort constant sur une course définie quelle que soit la position de réglage de la colonne, et que ce niveau d'effort est atteint après un déplacement du volant très faible.

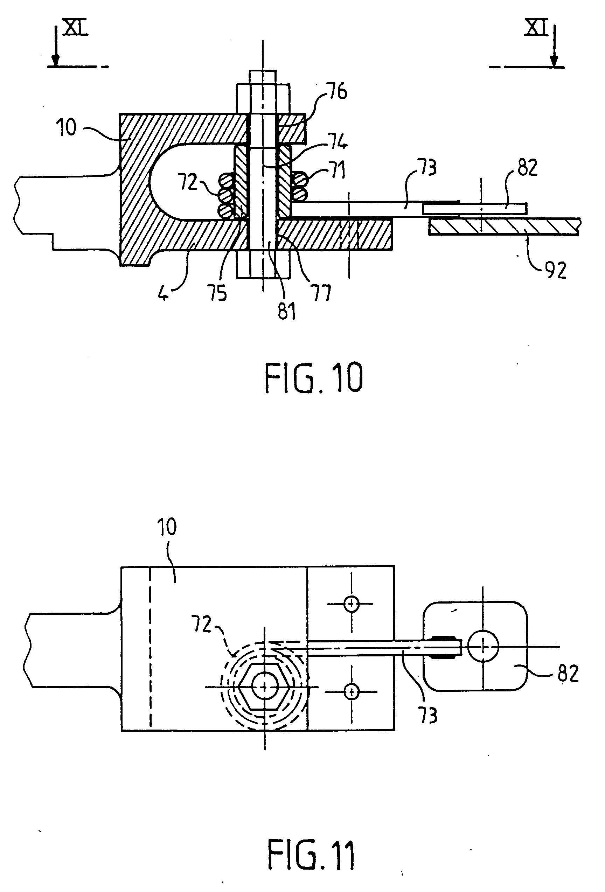

Un autre mode de réalisation du système d'absorption d'énergie selon l'invention, est représenté sur les Figures 10 et 11. Ce système d'absorption d'énergie est constitué d'un fil 71, avec un enroulement 72, et une partie rectiligne 73. La partie 72 est enroulée autour d'un axe 74 de maintien. L'axe 74 de maintien est monté sur le tube-corps 10, l'extrémité libre de la partie rectiligne 73 est fixée sur la pièce dentée 92, de manière que la partie 73 soit sensiblement dans la même direction que l'effort à amortir. Ainsi, lors d'un choc, celui-ci provoque l'effort de traction nécessaire pour dérouler l'enroulement 72 du fil 71, afin de faire passer le fil 71 d'une forme enroulée à une forme quasiment rectiligne, de façon à absorber l'énergie demandée.

Dans ce système d'absorption d'énergie, la section du fil 71 peut être constante et évolutive, et le diamètre d'enroulement du fil 71 peut lui aussi être constant ou évolutif. Le fil 71 peut selon les exigences demandées être métallique ou en matière plastique. Afin d'améliorer le système d'absorption d'énergie, l'axe est constitué par un manchon ou entretoise 75 qui est monté entre les deux portées 76 et 77 appartenant au tube-corps 10. L'entretoise 75 et les deux portées 76 et 77 sont munies de trous traversés par un boulon 81, qui maintient l'ensemble en place. L'extrémité de l'enroulement 72 peut être fixée à l'entretoise 75. Une plaque d'accrochage 82, soudée à l'extrémité de la partie 73 du fil, 71 est raccordée à la pièce dentée 92.

Comme on peut le voir sur les Figures 1 et 2, le maintien en position du tube-corps 10 de la colonne de direction est assuré par deux V de serrage 50 et 51. Ces deux V de serrage 50 et 51 sont disposés chacun entre l'un des montants 12 et 13 et le tube-corps 10, avec les deux faces de chacun des V de serrage s'appliquant contre le tube-corps 10, de manière que lors du réglage en inclinaison, chacun des V 50 et 51 suivent le mouvement du tube-corps 10 en glissant le long de la paroi d'appui 52 et 53 de la patte de serrage 8 et 9 correspondante, et lors du réglage en profondeur le tube-corps 10 coulisse dans les V de serrage 50, 51.

Ce maintien comporte un système de guidage angulaire de chacun des V de serrage 50 et 51 dans le montant 12 et 13 correspondant. Ce système de guidage angulaire consiste en un téton 57 porté par la face externe 54 et 55 de chacun des V de serrage 50 et 51. Chacun de ces tétons 57 pénètrent et coulissent dans une fente 59 aménagée dans la patte de serrage 8 et 9 correspondante. Chacune de ces fentes 59 est inclinée par rapport à l'axe de la colonne de direction, de manière à être sensiblement perpendiculaire à la trajectoire du conducteur, lors d'un choc, qui peut être déterminée à l'avance sur un mannequin par un essai.

De plus, le maintien comporte un système anti-rotation du tube-corps 10, qui consiste en une plaque 64 fixée en dessous du tube-corps 10. Cette plaque 64 comporte deux ailes 60 et 61 parallèles à chacun des montants 12 et 13. La distance entre les faces externes 62 et 63 des ailes 60 et 61 est légèrement plus faible que l'espacement des parois d'appui 52 et 53 des pattes de serrage 8 et 9. De plus, la plaque 64 du système anti-rotation a ses ailes 60 et 61 qui sont traversées par l'axe 3 du système de blocage. Un autre mode de réalisation du système anti-rotation, qui n'est pas représenté sur les Figures, consiste en un élément central fixé en dessous du tube-corps, et qui est traversé par l'axe du système de blocage.

Les signes de référence insérés après les caractéristiques techniques mentionnées dans les revendications, ont pour seul but de faciliter la compréhension de ces dernières, et n'en limitent aucunement la portée.

## Revendications

1. Dispositif d'absorption d'énergie pour colonne de direction de véhicule automobile réglable en profondeur et en inclinaison dont l'arbre de direction est monté dans un tube-corps (10), qui est supporté et bloqué sur la carrosserie à la position voulue, comportant:
- un support (11) lié à la carrosserie et recevant le tube-corps (10),
- un système de blocage du tube-corps dans le support, dont l'axe de blocage est perpendiculaire à l'axe de la colonne de direction, le système de blocage agissant au moyen d'un organe de manoeuvre (4),
- un système de réglage en profondeur coopérant avec le système de blocage,
- un système de réglage en inclinaison coopérant avec le système de blocage,
- un système d'absorption d'énergie (95; 71, 72, 73) disposé entre le tube-corps (10) et l'organe de manoeuvre (4), et agissant dans une direction sensiblement parallèle à l'axe de la colonne de direction,
caractérisé en ce que:
- le système d'absorption d'énergie est relié
• d'une part du côté opposé de l'extrémité du tube-corps (10) située à l'opposé du volant du conducteur, et
• d'autre part à un système d'accrochage (91, 92) à un élément fixe, en position de blocage de la colonne,
- le système d'accrochage et le système de blocage étant agencés de manière que, lors du desserrage du système de blocage par l'organe de manoeuvre (4), ledit organe de manoeuvre (4) entraîne un désaccouplement du système d'accrochage.

2. Dispositif d'absorption d'énergie selon la revendication 1, caractérisé en ce que le système de blocage du tube-corps (10), dans le support (11), comportant deux montants (12, 13), est constitué par:
- une tige de serrage (3) traversant deux pattes de serrage (8, 9) aménagées sur chacun des montants (12, 13) du support (11),
- un système de transformation de mouvement (90) monté à l'extérieur de l'un des montants (13), à l'extrémité de la tige de serrage (3),
- un moyen de tenue axiale (93) monté à l'extérieur de l'autre montant (12) sur l'autre extrémité de la tige de serrage (3),
- l'organe de manoeuvre (4), monté sur le système de transformation de mouvement (90), de manière qu'en tournant l'organe de manoeuvre (4) dans le sens voulu, autour de l'axe de blocage, on assure par le système de transformation de mouvement (90) le blocage désiré.

3. Dispositif d'absorption d'énergie selon les revendications 1 et 2, caractérisé en ce que le système d'accrochage comporte:
- une pièce dentée (91) solidaire de la tige de serrage (3) dans le sens axial de cette tige de serrage (3),
- une pièce dentée (92) solidaire du système d'absorption d'énergie, ladite pièce dentée (92) étant munie d'un trou oblong (94) de passage de la tige de serrage (3) permettant la course de réglage en profondeur,
- le déplacement minimal pour désolidariser les pièces dentées (91, 92), c'est-à-dire déplacer la pièce (91) par rapport à l'autre pièce (92), étant inférieur à la course de serrage de la tige de serrage (3) donnée par le système de transformation de mouvement (90).

4. Dispositif d'absorption d'énergie selon les revendications 1 et 2 caractérisé en ce que le système d'accrochage comporte:
- une pièce dentée liée au support (11),
- une pièce dentée solidaire du système d'absorption d'énergie, ladite pièce dentée étant munie d'un trou oblong de passage de la tige (3) permettant la source de réglage en profondeur.
- un système d'accouplement des deux pièces, lié à la commande du système de blocage, la course de désaccouplement étant inférieure à la course de desserrage du système de blocage.

5. Dispositif d'absorption d'énergie selon l'une des revendications 3 et 4, caractérisé en ce que les pièces dentées (91, 92) ont des dents à section triangulaire, rectangulaire ou carrée.

6. Dispositif d'absorption d'énergie selon l'une des revendications 3 et 4, caractérisé en ce que l'une des pièces dentées (91) a une seule dent notamment triangulaire, tandis que l'autre pièce dentée (92) est munie de dents à section correspondante, notamment triangulaire.

7. Dispositif d'absorption d'énergie selon l'une des revendications 3 et 4, caractérisé en ce que l'une des pièces dentées (92) a des dents carrées, et l'autre pièce dentée (91) a une protubérance circulaire.

8. Dispositif d'absorption d'énergie selon l'une des revendications 3 et 4, caractérisé en ce que l'une des pièces dentées (92) a des dents rectangulaires, et l'autre pièce dentée (91) a une protubérance rectangulaire avec un chanfrein d'entrée.

9. Dispositif d'absorption d'énergie selon l'une des revendications 3 et 4, caractérisé en ce que l'une des pièces dentées (92) a des dents arrondies, et en ce que l'autre pièce dentée (91) a une protubérance circulaire.

10. Dispositif d'absorption d'énergie selon l'une quelconque des revendications 3 à 9, caractérisé en ce que le système d'absorption d'énergie est un tirant (95) ayant la forme d'un élément plan enroulé autour d'un support transversal (96) monté sur le tube-corps (10), de manière à avoir une première partie dont l'extrémité est reliée à la pièce dentée (92), et qui est dans le prolongement de la pièce dentée (92) et une deuxième partie en forme de retour après le transport transversal (96), afin que lors d'un choc le retour se déroule sous un effort déterminé pour l'absorber l'énergie voulue.

11. Dispositif d'absorption d'énergie selon l'une quelconque des revendications 3 à 9, caractérisé en ce que le système d'absorption d'énergie est constitué d'un fil (71) avec un enroulement (72) autour d'un axe de maintien, l'axe de maintien étant monté sur le tube-corps (10), et une partie rectiligne (73) dont l'extrémité libre est fixée sur la pièce dentée (92), la partie (73) étant sensiblement dans la même direction que l'effort à amortir, de manière que lors d'un choc, celui-ci provoque l'effort de traction nécessaire pour faire se dérouler l'enroulement (72) du fil (71), afin de faire passer ce fil (71) d'une forme enroulée à une forme quasiment rectiligne de façon à absorber l'énergie demandée.

12. Dispositif d'absorption d'énergie selon la revendication 11, caractérisé en ce que la section du fil (71) est constante ou évolutive.

13. Dispositif d'absorption d'énergie selon l'une des revendications 11 ou 12, caractérisé en ce que le diamètre d'enroulement du fil (71) est constant ou évolutif.

14. Dispositif d'absorption d'énergie selon l'une quelconque des revendications 11 à 13, caractérisé en ce que le fil (71) est métallique ou en matière plastique.

15. Dispositif d'absorption d'énergie selon l'une quelconque des revendications 11 à 14, caractérisé en ce que l'axe est constitué par un manchon (75) monté entre deux portée (76, 77) appartenant au tube-corps (10), le manchon (75) et les deux portées (76? 77) étant munis de trous traversés par un boulon (81) maintenant l'ensemble en place.

16. Dispositif d'absorption d'énergie, selon l'une quelconque des revendications 11 à 15, caractérisé en ce qu' une plaque d'accrochage(82) est soudée à l'extrémité de la partie (73) du fil (71) et raccordée à la pièce dentée (92).

17. Dispositif d'absorption d'énergie selon l'une quelconque des revendications 2 à 16, caractérisé en ce que le système de réglage en profondeur est constitué par une lumière aménagée dans chacun des montants, chaque lumière étant sensiblement parallèle à l'axe de la colonne de direction et d'une largeur légèrement plus grande que le diamètre de la tige de serrage (3), de manière qu'elle puisse traverser et coulisser facilement dans chacune de ces lumières.

18. Dispositif d'absorption d'énergie selon l'une quelconque des revendications 2 à 17, caractérisé en ce que le système de réglage en inclinaison est constitué par une lumière (19) aménagée dans chacune des pattes (8, 9) du support (11), et d'une largeur légèrement plus grande que le diamètre de la tige de serrage (3), de manière que la tige de serrage (3) puisse coulisser dans chacune de ces lumières (19).

19. Dispositif d'absorption d'énergie selon l'une quelconque des revendications 2 à 18, caractérisé en ce que le maintien en position du tube-corps (10) est assuré par deux V de serrage (50, 51) disposés chacun entre l'un des montants (12, 13), et le tube-corps (10) avec les deux faces de chacun des V s'appliquant contre le tube-corps (10), de manière que lors du réglage en inclinaison, chacun des V (50, 51) suive le mouvement du tube-corps (10) en glissant le long de la paroi d'appui (52, 53) de la patte de serrage (8, 9) correspondante, et lors du réglage en profondeur le tube-corps (10) coulisse dans les V de serrage (50, 51).

20. Dispositif d'absorption d'énergie selon la revendication 19, caractérisé en ce qu'il comporte un système de guidage angulaire de chacun des V de serrage (50, 51) dans le montant (12, 13) correspondant.

21. Dispositif d'absorption d'énergie selon la revendication 20, caractérisé en ce que le système de guidage angulaire consiste en un téton (57) porté par la face externe (54, 55) de chacun des V de serrage (50, 51), qui pénètre et coulisse dans une fente (59) aménagée dans la patte de serrage (8, 9) correspondante.

22. Dispositif d'absorption d'énergie selon la revendication 21, caractérisé en ce que chacune des fentes (59) est inclinée par rapport à l'axe de la colonne de direction, de manière à être sensiblement perpendiculaire à la trajectoire du conducteur telle qu'elle peut être déterminée sur un mannequin lors d'un essai de choc.

23. Dispositif d'absorption d'énergie selon l'une quelconque des revendications 19 à 22, caractérisé en ce qu' il comporte un système anti-rotation du tube-corps (10) autour de son axe.

24. Dispositif d'absorption d'énergie selon la revendication 23, caractérisé en ce que le système anti-rotation consiste en une plaque (64) fixée au tube-corps (10), et comportant deux ailes (60, 61) parallèles à chacun des montants (12, 13), et dont la distance entre les faces externes (62, 63) est légèrement plus faible que l'espacement des parois d'appui (52, 53) des pattes de serrage (8, 9).

25. Dispositif d'absorption d'énergie selon la revendication 24, caractérisé en ce que la plaque (64) du système anti-rotation a ses ailes (60, 61) qui sont traversées par la tige (3) du système de blocage.

26. Dispositif d'absorption d'énergie selon la revendication 25, caractérisé en ce que le système anti-rotation consiste en un élément central fixé au tube-corps (10), ledit élément central étant traversé par la tige (3) du système de blocage.

## Claims

1. Energy-absorbing device for an automobile vehicle steering column adjustable in depth and inclination, the steering shaft of which is mounted in a body-tube (10), which is supported and locked to the vehicle body in the desired position, comprising:
- a support (11) fixed to the vehicle body and receiving the body-tube (10),
- a system for locking the body-tube (10) in the support (11), the locking axis of which is perpendicular to the axis of the steering column, the locking system acting by means of an operating device (4),
- a depth adjustment system working with the locking system,
- an inclination adjustment system working with the locking system,
- an energy-absorbing system (95; 71, 72, 73) arranged between the body-tube (10) and the operating device (4), and acting in a direction substantially parallel to the axis of the steering column,
characterized in that
- the energy-absorbing system is connected
• on one hand, alongside the end of the body-tube (10) facing the driver's wheel,
• and on the other hand, to a system for securing (91, 92) to a fixed element, in a locked position of the column,
- the securing system and locking system being arranged in such a way that when the locking system is loosened by the operating lever (4), said operating lever (4) causes an uncoupling of the securing system.

2. The energy-absorbing system according to Claim 1 characterized in that the system for locking the body-tube (10) in the support (11), comprising two vertical members (12, 13), is made up of
- a tightening rod (3) traversing two tightening brackets (8, 9) provided on each vertical member (12, 13) of the support (11),
- a movement transformation system (90) mounted on the outside of one of the vertical members (13), at the end of the tightening rod (3),
- an axial holding means (93) mounted on the outside of the other vertical member (12) on the other end of the tightening rod (3),
- an operating device (4) mounted on the movement transformation system (90), in such a way that by turning the operating device (4) in the desired direction, about the locking axis, the desired locking is ensured by the movement transformation system (90).

3. The energy-absorbing device according to any of Claims 1 or 2 characterized in that the securing system comprises:
- a toothed part (91) which is rigidly locked to the tightening rod (3), in the axial direction of this tightening rod (3),
- a toothed part (92) rigidly locked to the energy-absorbing system, said toothed part (92) being provided with an ablong passage hole (94) for the tightening rod (3) allowing the depth adjustment distance of travel,
- the minimum displacement to unlock the toothed parts (91, 92), i.e. move toothed part (91) with respect to the other part (92), being less than the tightening distance of travel of the tightening rod (3) given by the movement transformation system (90).

4. The energy-absorbing device according to any of Claims 1 or 2 characterized in that the securing system comprises:
- a toothed part fixed to the support (11),
- a toothed part rigidly locked to the energy-absorbing system, said toothed part being provided with an oblong passage hole for the rod (3), allowing the depth adjustment distance of travel,
- a coupling system for the two parts, fixed to the command of the locking system, the uncoupling distance of travel being less than the loosening distance of travel of the locking system.

5. The energy-absorbing device according to any of Claims 3 or 4 characterized in that the toothed parts (91, 92) have triangular, rectangular or square section teeth.

6. The energy-absorbing device according to any of Claims 3 or 4 characterized in that one of the toothed parts (91) has a single tooth, notably triangular, whereas the other toothed part (92) is provided with teeth of corresponding section, notably triangular.

7. The energy-absorbing device according to any of Claims 3 or 4 characterized in that one of the toothed parts (92) has square teeth, and the other toothed part (91) has a circular protuberance.

8. The energy-absorbing device according to any of Claims 3 or 4 characterized in that one of the toothed parts (92) has rectangular teeth, and the other toothed part (91) has a rectangular protuberance with a tooth chamfer.

9. The energy-absorbing device according to any of Claims 3 or 4 characterized in that one of the toothed parts (92) has rounded teeth, and the other toothed part (91) has a circular protuberance.

10. The energy-absorbing device according to any one of Claims 3 to 9 characterized in that the energy-absorbing system is a tie rod (95) having the form of a flat element wound around a transversal support (96) mounted on the body-tube (10), so as to have a first part whose end is connected to the toothed part (92), and which is in the extension of the toothed part (92), and a second part in the form of a return after the transversal support (96), in order that at the time of an impact, the return unwinds under a predetermined force to absorb the desired energy.

11. The energy-absorbing device according to any one of Claims 3 to 9 characterized in that the energy absorbing system is made up of a wire (71) with a winding (72) around a holding axis, the holding axis being mounted on the body-tube (10) and a rectilinear part (73) whose free end is fixed onto the toothed part (92), the rectilinear part (73) being substantially in the same direction as the force to dampen, such that at the time of an impact, the impact generates the traction force required to make the winding (72) of the wire (71) unwind, in order to make this wire (71) pass from a rolled form to an almost rectilinear form in such a way as to absorb the desired energy.

12. The energy-absorbing device according to Claim 11 characterized in that the cross-section of the wire (71) is constant or evolutive.

13. The energy-absorbing device according to Claim 11 or 12 characterized in that the diameter of the winding of the wire (71) is constant or evolutive.

14. The energy-absorbing device according to any one of Claims 11 to 13 characterized in that the wire (71) is metallic or made from plastic material.

15. The energy-absorbing device according to any one of Claims 11 to 14 characterized in that the axis is made up of a sleeve (75) mounted between two arms (76, 77) of body-tube (10), the sleeve (75) and the two arms (76, 77) being provided with holes traversed by a bolt (81) for holding the assembly in position.

16. The energy-absorbing device according to any one of Claims 11 to 15, characterized in that a securing plate (82) is welded to the end of the part (73) of the wire (71) and connected to the toothed part (92).

17. The energy-absorbing device according to any of Claims 2 to 16, characterized in that the depth adjustment system is made up of an elongated hole made in each of the vertical members, each elongated hole being substantially parallel to the axis of the steering column and slightly wider than the diameter of the tightening rod (3), such that it can traverse and slide easily in each of these elongated holes.

18. The energy-absorbing device according to any of Claims 2 to 17, characterized in that the inclination adjustment system is made up of an elongated hole (19) made in each bracket (8, 9) of the support (11), said elongated hole being fractionally wider than the diameter of the tightening rod (3), such that the tightening rod (3) can slide in each to these elongated holes (19).

19. The energy-absorbing device according to any one of Claims 2 to 18 characterized in that the body-tube (10) is held in position by two tightening Vs (50, 51) each arranged between one of the vertical members (12, 13) and the body-tube (10), with the two faces of the V bearing against the body-tube (10), in such a way that at the time an inclination adjustment is made, each V (50, 51) follows the movement of the body tube (10) by sliding along the bearing wall (52, 53) of the corresponding tightening bracket (8, 9), and at the time a depth adjustment is made, the body-tube (10) slides in the tightening Vs (50, 51).

20. The energy-absorbing device according to Claim 19, characterized in that it comprises a system for angularly guiding each tightening V (50, 51) in the corresponding vertical member (12, 13).

21. The energy-absorbing device according to Claim 20, characterized in that the angular guide system is made up of a pin (57) carried by the outer face (54, 55) of each tightening V (50, 51), said pin penetrating and sliding in a slot (59) made in the corresponding tightening bracket (8, 9).

22. The energy-absorbing device according to Claim 21, characterized in that each slot (59) is inclined with respect to the axis of the steering column so as to be substantially perpendicular to the trajectory of the driver's body, as can be determined on a dummy at the time of an impact test.

23. The energy-absorbing device according to any one of Claims 19 to 22 characterized in that it comprises an anti-rotation system to prevent the body-tube (10) rotating about its axis.

24. The energy-absorbing device according to Claim 23 characterized in that the anti-rotation system is made up of a plate (64) fixed to the body-tube (10) and comprises two wings (60, 61) arranged parallel to each vertical member (12, 13), the distance between the outer faces (62, 63) of said wings being slightly less than the spacing of the bearing walls (52, 53) of the tightening brackets (8, 9).

25. The energy-absorbing device according to Claim 24 characterized in that the wings (60, 61) of the plate (64) of the anti-rotation system are traversed by the rod (3) of the locking system.

26. The energy-absorbing device according to Claim 25 characterized in that the anti-rotation system consists of a central element fixed to the body-tube (10), said central element being traversed by the rod (3) of the locking system.

## Patentansprüche

1. Energieabsorptionsvorrichtung für die in der Tiefe und der Neigung verstellbare Lenksäule eines Kraftfahrzeugs, deren Lenkwelle in einem Rohrkörper (10) angebracht ist, welcher in einer gewünschten Position an der Karosserie gestützt und verriegelt ist, mit:
- einer mit der Karosserie verbundenen und den Rohrkörper (10) aufnehmenden Stützeinrichtung (11),
- einem System zum Verriegeln des Rohrkörpers in der Stützeinrichtung, wobei die Verriegelungsachse des Systems senkrecht zur Achse der Lenksäule verläuft und das Verrieglungssystem über ein Betätigungselement (4) wirkt,
- einem mit dem Verriegelungssystem zusammenwirkenden Tiefeneinstellungssystem,
- einem mit dem Verriegelungssystem zusammenwirkenden Neigungseinstellungssystem,
- einem zwischen dem Rohrkörper (10) und dem Betätigungselement (4) angeordneten Energieabsorptionssystem (95; 71, 72, 73), das in einer im wesentlichen parallel zur Achse der Lenksäule verlaufenden Richtung wirkt;
dadurch gekennzeichnet, daß
das Energieabsorptionssystem verbunden ist:
einerseits mit der gegenüberliegenden Seite des Endes des Rohrkörpers (10), das dem Lenkrad entgegengesetzt ist, und
andererseits mit einem System (91, 92) zur Verbindung mit einem festen Element in der Verriegelungsposition der Lenksäule,
- wobei das Verbindungssystem und das Verriegelungssystem derart ausgebildet sind, daß beim Lösen des Verriegelungssystems durch das Betätigungsorgan (4) dieses ein Lösen des Verbindungssystems bewirkt.

2. Energieabsorptionsvorrichtung nach Anspruch 1, dadurch gekennzeichnet, daß das System zur Verriegelung des Rohrkörpers (10) in der Stützeinrichtung (11), die zwei Streben (12, 13) aufweist, gebildet ist durch:
- eine Klemmstange (3), die zwei an jeder der Streben (12, 13) der Stütze (11) angebrachte Klemmlaschen (8, 9) durchquert,
- ein Bewegungsumsetzungssystem (90), das auf der Außenseite einer der Streben (13) am Ende der Klemmstange (3) angebracht ist,
- eine axiale Halteeinrichtung (93), die auf der Außenseite der anderen Strebe (12) am anderen Ende der Klemmstange (3) angebracht ist,
- das Betätigungselement (4), das an dem Bewegungsumsetzungssystem (90) derart angebracht ist, daß beim Drehen des Betätigungselements (4) in der gewünschten Richtung um die Verriegelungsachse die gewünschte Verriegelung durch das Bewegungsumsetzungssystem (90) erreicht wird.

3. Energieabsorptionsvorrichtung nach den Ansprüchen 1 und 2, dadurch gekennzeichnet, daß das Verbindungssystem aufweist:
- ein in axialer Richtung der Klemmstange (3) fest mit der Klemmstange (3) verbundenes gezahntes Teil (91),
- ein fest mit dem Energieabsorptionssystem verbundenes gezahntes Teil (92), wobei das gezahnte Teil (92) mit einem länglichen Loch (94) für den Durchgang der Klemmstange (3) versehen ist, welches die Tiefeneinstellung ermöglicht,
- wobei die minimale Verschiebung zum Trennen der gezahnten Teile (91, 92), das heißt zum Verschieben des Teils (91) in bezug auf das andere Teil (92), kleiner als der durch das Bewegungsumwandlungssystem (90) gegebene Klemmweg der Klemmstange (3) ist.

4. Energieabsorptionsvorrichtung nach den Ansprüchen 1 und 2, dadurch gekennzeichnet, daß das Verbindungssystem aufweist:
- ein mit der Stützeinrichtung (11) verbundenes gezahntes Teil,
- ein fest mit dem Energieabsorptionssystem verbundenes gezahntes Teil, wobei das gezahnte Teil mit einem länglichen Loch für den Durchgang der Klemmstange (3) versehen ist, welches die Tiefeneinstellung ermöglicht,
- ein mit der Betätigungseinrichtung des Verriegelungssystems verbundenes System zum Verbinden der beiden Teile, wobei der Löseweg des Verbindungssystems kürzer als der Löseweg des Verriegelungssystems ist.

5. Energieabsorptionsvorrichtung nach einem der Ansprüche 3 und 4, dadurch gekennzeichnet, daß die gezahnten Teile (91, 92) Zähne mit dreieckigem, recheckigem oder quadratischem Querschnitt haben.

6. Energieabsorptionsvorrichtung nach einem der Ansprüche 3 und 4, dadurch gekennzeichnet, daß eines der gezahnten Teile (91) einen einzelnen insbesondere dreieckigen Zahn aufweist, während das andere gezahnte Teil (92) mit Zähnen entsprechenden, nämlich dreieckigen Querschnitts versehen ist.

7. Energieabsorptionsvorrichtung nach einem der Ansprüche 3 und 4, dadurch gekennzeichnet, daß eines der gezahnten Teile (92) quadratische Zähne und das andere gezahnte Teil (91) einen kreisförmigen Vorsprung aufweist.

8. Energieabsorptionsvorrichtung nach einem der Ansprüche 3 und 4, dadurch gekennzeichnet, daß eines der gezahnten Teile (92) rechteckige Zähne und das andere gezahnte Teil (91) einen rechteckigen Vorsprung mit einer Eintrittsschräge aufweist.

9. Energieabsorptionsvorrichtung nach einem der Ansprüche 3 und 4, dadurch gekennzeichnet, daß eines der gezahnten Teile (92) gerundete Zähne und das andere gezahnte Teil (91) einen kreisförmigen Vorsprung aufweist.

10. Energieabsorptionsvorrichtung nach einem der Ansprüche 3 bis 9, dadurch gekennzeichnet, daß das Energieabsorptionssystem ein Zugelement (95) ist, das die Form eines flachen Elements aufweist, welches um eine transversale Stütze (96) gewickelt ist, die derart an dem Rohrkörper (10) angebracht ist, daß es einen ersten Bereich, dessen Ende mit dem gezahnten Teil (92) verbunden ist und der in Verlängerung des gezahnten Teils (92) vorgesehen ist, und einen zweiten Bereich in Form einer Rückstelleinrichtung nach der transversalen Stütze (96) aufweist, so daß es bei einem Stoß unter einer vorgegebenen Kraft aufrollt, um die gewünschte Energie zu absorbieren.

11. Energieabsorptionsvorrichtung nach einem der Ansprüche 3 bis 9, dadurch gekennzeichnet, daß das Energieabsorptionssystem aus einem Draht (71) mit einer Wicklung (72) um eine Stützachse, wobei die Stützachse an dem Rohrkörper (10) befestigt ist, und mit einem geraden Teil (72) besteht, dessen freies Ende an dem gezahnten Teil (92) befestigt ist, wobei der Teil (73) sich im wesentlichen in derselben Richtung wie die aufzunehmende Kraft erstreckt, derart, daß diese bei einem Stoß die Zugkraft bewirkt, die zum Aufrollen der Wicklung (72) des Drahts (71) erforderlich ist, um den Draht (71) aus einer aufgewickelten Form in eine quasi gestreckte Form zu überführen und so die zu absorbieren erforderliche Energie aufzunehmen.

12. Energieabsorptionsvorrichtung nach Anspruch 11, dadurch gekennzeichnet, daß der Querschnitt des Drahtes (71) konstant oder sich erweiternd ist.

13. Energieabsorptionsvorrichtung nach einem der Ansprüche 11 oder 12, dadurch gekennzeichnet, daß der Durchmesser der Wicklung (72) des Drahtes (71) konstant oder sich erweiternd ist.

14. Energieabsorptionsvorrichtung nach einem der Ansprüche 11 bis 13, dadurch gekennzeichnet, daß der Draht (71) metallisch oder aus Kunststoff ist.

15. Energieabsorptionsvorrichtung nach einem der Ansprüche 11 bis 14, dadurch gekennzeichnet, daß die Achse durch eine Hülse (75) gebildet ist, die zwischen zwei Trageinrichtungen (76, 77) des Rohrkörpers (10) angebracht ist, wobei die Hülse (75) und die beiden Trageinrichtungen (76, 77) mit Löchern versehen sind, durch welche sich ein die Anordnung in ihrer Position haltender Bolzen (81) erstreckt.

16. Energieabsorptionsvorrichtung nach einem der Ansprüche 11 bis 15, dadurch gekennzeichnet, daß eine Befestigungsplatte (82) am Ende des Teils (73) des Drahtes (71) angeschweißt und mit dem gezahnten Teil (92) verbunden ist.

17. Energieabsorptionsvorrichtung nach einem der Ansprüche 2 bis 16, dadurch gekennzeichnet, daß das Tiefeneinstellungssystem durch eine in jeder der Streben ausgebildete Ausnehmung gebildet ist, wobei jede Ausnehmung im wesentlichen parallel zur Achse der Lenksäule verläuft und eine Breite hat, die geringfügig größer als der Durchmesser der Klemmstange (3) ist, so daß diese jede der Ausnehmungen durchqueren und leicht in diesen gleiten kann.

18. Energieabsorptionsvorrichtung nach einem der Ansprüche 2 bis 17, dadurch gekennzeichnet, daß das Neigungseinstellungssystem aus einer Ausnehmung (19) besteht, die in jedem der Ansätze (8, 9) der Stützeinrichtung (11) ausgebildet ist, und die eine Breite hat, die geringfügig größer als der Durchmesser der Klemmstange (3) ist, so daß diese in jeder Ausnehmung leicht gleiten kann.

19. Energieabsorptionsvorrichtung nach einem der Ansprüche 2 bis 18, dadurch gekennzeichnet, daß der Rohrkörper (10) durch zwei V-förmige Klemmeinrichtungen (50, 51) in Position gehalten ist, welche jeweils zwischen einer der Streben (12, 13) und dem Rohrkörper (10) gehalten sind, wobei die beiden Flächen jeder V-förmigen Einrichtung an dem Rohrkörper (10) derart anliegt, daß bei der Neigungseinstellung jede der V-förmigen Einrichtungen (50, 51) der Bewegung des Rohrkörpers (10) folgt, indem sie entlang der Anlagewand (52, 53) der entsprechenden Klemmlasche (8, 9) gleitet, während der Rohrkörper (10) bei der Tiefenverstellung in den V-förmigen Klemmeinrichtungen (50, 51) gleitet.

20. Energieabsorptionsvorrichtung nach Anspruch 19, dadurch gekennzeichnet, daß sie ein System zur Winkelführung jeder der V-förmigen Klemmeinrichtungen (50, 51) in der entsprechenden Strebe (12, 13) aufweist.

21. Energieabsorptionsvorrichtung nach Anspruch 20, dadurch gekennzeichnet, daß das Winkelführungssystem aus einem Stift (57) besteht, der auf der Außenfläche (54, 55) jeder der V-förmigen Klemmeinrichtungen (50, 51) getragen ist und der in einen Schlitz (59) in der entsprechenden Klemmlasche (8, 9) eingreift und gleitet.

22. Energieabsorptionsvorrichtung nach Anspruch 21, dadurch gekennzeichnet, daß jeder der Schlitze (59) in bezug auf die Achse der Lenksäule derart geneigt, daß sie im wesentlichen senkrecht zur Bewegungsrichtung des Fahrers verläuft, wie sie mittels eines Dummies bei einem Aufprallversuch festgestellt werden kann.

23. Energieabsorptionsvorrichtung nach einem der Ansprüche 19 bis 22, dadurch gekennzeichnet, daß sie ein System zum Verhindern des Drehens des Rohrkörpers (10) um seine Achse aufweist.

24. Energieabsorptionsvorrichtung nach Anspruch 23, dadurch gekennzeichnet, daß das Anti-Rotationssystem aus einer an dem Rohrkörper (10) befestigten Platte (64) besteht, die zwei zu den Streben (12, 13) jeweils parallele Schenkel (60, 61) aufweist, und bei der der Abstand zwischen den Außenflächen (62, 63) geringfügig kleiner ist als der Abstand zwischen den Anlagewänden (52, 53) der Klemmlaschen (8, 9).

25. Energieabsorptionsvorrichtung nach Anspruch 24, dadurch gekennzeichnet, daß die Platte (64) des Anti-Rotationssystems Schenkel (60, 61) aufweist, welche von der Stange (3) des Verriegelungssystems durchsetzt sind.

26. Energieabsorptionsvorrichtung nach Anspruch 25, dadurch gekennzeichnet, daß das Anti-Rotationssystem aus einem an dem Rohrkörper (10) befestigten zentralen Element besteht, wobei das zentrale Element von der Stange (3) des Verriegelungssystems durchsetzt ist.
